# EUROPEAN PATENT SPECIFICATION

(11) **EP 3 031 634 B1**
(45) Date of publication and mention of the grant of the patent: **16.08.2017**
(21) Application number: 15197339.3
(22) Date of filing: 01.12.2015
(51) Int. Cl.: B60C 23/12

(54) **ON-WHEEL AIR MAINTENANCE SYSTEM**
RADSEITIGES PUMPSYSTEM
SYSTÈME AUTOGONFLAGE SUR ROUE

(30) Priority: 12.12.2014 US 201462091143 P
(43) Date of publication of application: 15.06.2016
(73) Proprietor: The Goodyear Tire & Rubber Company, Akron, Ohio 44316 (US)
(72) Inventor: HINQUE, Daniel Paul Luc Marie, B-6720 Habay-la-Neuve (BE)
(74) Representative: Kutsch, Bernd

(56) References cited:
- GB-A- 1 017 074
- US-A- 5 052 456
- US-A1- 2012 186 714

## Description

### Technical Field

The present invention relates generally to the automotive field, and more specifically, to a new and useful tire air maintenance system in the automotive field.

### Background of the Present Invention

Non-optimally pressurized pneumatic tires contribute to low fuel efficiency. These effects are particularly felt in the trucking industry, where long distances and large loads amplify the effects of an underinflated tire. However, it is often inconvenient and inefficient for truck drivers to constantly stop, check, and inflate the vehicle tires to the optimal pressure, leading to the persistence of less-than-optimal fuel efficiency in truck fleets. This challenge has led to several conventional auto-inflating tire systems. Conventional auto-inflating tire systems may be either central or distributed, but each suffers from its own set of drawbacks. Central inflation systems are complex and expensive, and require significant work for aftermarket installation (drilling through axles, tapping existing air lines, etc.). Distributed systems are mounted at each wheel and can be less expensive, but the potential for reduced cost is typically at the expense of the continuous replacement of the device (which fails due to the harsh wheel environment). Thus, there is a need in the automotive field to create a new and useful air maintenance system for pneumatic tires.

US-A-2012/186714 describes a system in accordance with the preamble of claim 1.

A further device for deflating or inflating a tire when rotating is described in US-A-5,052,456 and GB-A-1,017,074 respectively.

### Summary of the Invention

The invention relates to a system in accordance with claim 1.

Dependent claims refer to preferred embodiments of the invention.

An air maintenance system in accordance with a preferred aspect if the present invention includes a rotating inner ring secured to a vehicle wheel, a stationary outer ring maintaining a constant angular position relative to the vehicle wheel, an eccentric mass secured to the stationary outer ring, an occlusion roller located proximate to the eccentric mass, and a flexible tube defining a pump cavity. The air maintenance system pumps a fluid from the ambient environment into a pneumatic tire by applying an occluding force against the flexible tube, periodically occluding portions of the pump cavity.

According to another preferred aspect of the system, the rotating inner ring rotates relative to the eccentric mass.

According to still another preferred aspect of the system, relative diameters between the inner rotating ring and roller elements of the stationary outer ring collaborate to achieve a desired gear ratio and pumping speed.

According to yet another preferred aspect of the system, the inner rotating ring provides a smooth bearing surface for the roller elements and the occlusion roller.

According to still another preferred aspect of the system, the stationary outer ring encircles the air maintenance system and applies an inward radial force against the roller elements and occlusion roller when assembled.

According to yet another preferred aspect of the system, the inward radial force maintains the inner rotating ring and the roller elements.

According to still another preferred aspect of the system, the inner rotating ring has a substantially homogeneous weight distribution such that no portion of the inner rotating ring is substantially heavier than another portion.

According to yet another preferred aspect of the system, the inner rotating ring is substantially rigid and made of metal.

According to still another preferred aspect of the system, the inner rotating ring is made of a rigid polymer.

According to yet another preferred aspect of the system, the eccentric mass overcomes inertia and friction generated by rotation of the inner rotating ring and rotating wheel such that the eccentric mass stays substantially static while the inner rotating ring rotates.

According to still another preferred aspect of the system, the eccentric mass maintains the angular position of the eccentric mass relative to a road surface as the vehicle wheel rotates and provides torque, generated by gravity, that opposes the rotation of the inner rotating ring with the vehicle wheel.

According to yet another preferred aspect of the system, the eccentric mass prevents the outer stationary ring from rotating with the vehicle wheel and the inner rotating ring.

According to still another preferred aspect of the system, the eccentric mass is rectangular.

According to yet another preferred aspect of the system, the eccentric mass is spherical.

According to still another preferred aspect of the system, the roller elements retain non-slip contact between the roller elements and the inner rotating ring.

According to yet another preferred aspect of the system, there are three roller elements.

According to still another preferred aspect of the system, the flexible tube defines a deformable interface that occludes the pump cavity.

According to yet another preferred aspect of the system, the flexible tube has an oval cross section.

According to still another preferred aspect of the system, the flexible tube comprises a flexible, elastomeric material.

According to yet another preferred aspect of the system, the flexible tube includes an inlet port and an outlet port each in fluid connection with a pressure regulator assembly.

### Definitions

"Axial" and "axially" means lines or directions that are parallel to the axis of rotation of the tire.

"Design rim" means a rim having a specified configuration and width. For the purposes of this specification, the design rim and design rim width are as specified by the industry standards in effect in the location in which the tire is made. For example, in the United States, the design rims are as specified by the Tire and Rim Association. In Europe, the rims are as specified in the European Tyre and Rim Technical Organization - Standards Manual and the term design rim means the same as the standard measurement rims. In Japan, the standard organization is The Japan Automobile Tire Manufacturer's Association.

"Design rim width" is the specific commercially available rim width assigned to each tire size and typically is between 75 and 90% of the specific tire's section width.

"Equatorial plane (EP)" means the plane perpendicular to the tire's axis of rotation and passing through the center of its tread.

"Footprint" means the contact patch or area of contact of the tire tread with a flat surface at zero speed and under normal load and pressure.

"Molded base width" refers to the distance between the beads of the tire in the curing mold. The cured tire, after removal from the curing mold will substantially retain its molded shape, and "molded base width" may also refer to the distance between the beads in an unmounted, cured tire.

"Nominal rim diameter" means the average diameter of the rim flange at the location where the bead portion of the tire seats.

"Normal inflation pressure" refers to the specific design inflation pressure and load assigned by the appropriate standards organization for the service condition for the tire.

"Normal load" refers to the specific design inflation pressure and load assigned by the appropriate standards organization for the service condition for the tire.

"Pneumatic tire" means a mechanical device of generally toroidal shape (usually an open torus) having beads and a tread and made of rubber, chemicals, fabric and steel or other materials. When mounted on the wheel of a motor vehicle, the tire, through its tread, provides a traction and contains the fluid or gaseous matter, usually air, that sustains the vehicle load.

"Radial" and "radially" means directions radially toward or away from the axis of rotation of the tire.

"Tire design load" is the base or reference load assigned to a tire at a specific inflation pressure and service condition: other load-pressure relationships applicable to the tire are based upon that base or reference.

### Brief Description of Drawings

The present invention will be described by way of example and with reference to the accompanying drawings, in which:
Fig. 1 schematically illustrates a cross-sectional view of an air maintenance assembly in accordance with the present invention.
Fig. 2 schematically illustrates a perspective view of part of the assembly of Fig. 1.
Fig. 3 schematically illustrates a perspective view of another part of the assembly of Fig. 1.
Fig. 4 schematically illustrates a perspective view of part of the air maintenance assembly of Fig. 1.
Fig. 5 schematically illustrates a perspective view of another part of the air maintenance assembly of Fig. 1.
Fig. 6 schematically illustrates a perspective view of still another part of the air maintenance assembly of Fig. 1.
Fig. 7 schematically illustrates a perspective view of yet another part of the air maintenance assembly of Fig. 1.
Fig. 8 schematically illustrates a perspective view of still another part of the air maintenance assembly of Fig. 1.
Fig. 9 schematically illustrates a perspective view of yet another part of the air maintenance assembly of Fig. 1.
Fig. 10 schematically illustrates a perspective view of still another part of the air maintenance assembly of Fig. 1.
Fig. 11 schematically illustrates a perspective view of yet another part of the air maintenance assembly of Fig. 1.
Fig. 12 schematically illustrates a perspective view of still another part of the air maintenance assembly of Fig. 1.
Fig. 13 schematically illustrates a perspective view of yet another part of the air maintenance assembly of Fig. 1.
Fig. 14 schematically illustrates a perspective view of still another part of the air maintenance assembly of Fig. 1.

### Detailed Description of Example Embodiments of the Present Invention

A tire inflation system has been disclosed. that mounts to the wheel of a vehicle. The tire inflation system includes a pumping ring that rotates with the wheel and a positioning system rotatably coupled to the wheel. The positioning system includes a positioning mechanism and an eccentric mass. A planetary roller may be disposed in non-slip contact with the pumping ring and the positioning system. A flexible diaphragm may define a pump cavity wherein relative motion between the pumping ring and positioning system may be translated by the planetary roller into an occluding force that deforms the diaphragm and thereby occludes the pump cavity. Relative motion between the pumping ring and the positioning system is achieved by coupling the eccentric mass to the positioning mechanism to offset the center of mass of the positioning system from the center of rotation of the positioning system. Such a system is disclosed in US-A-8,763,661, incorporated herein by reference in its entirety.

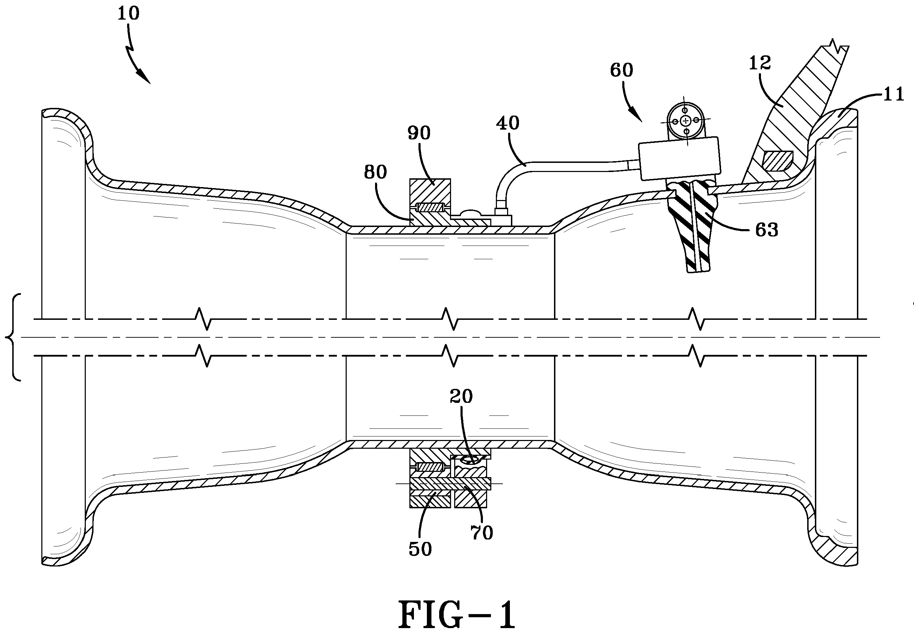

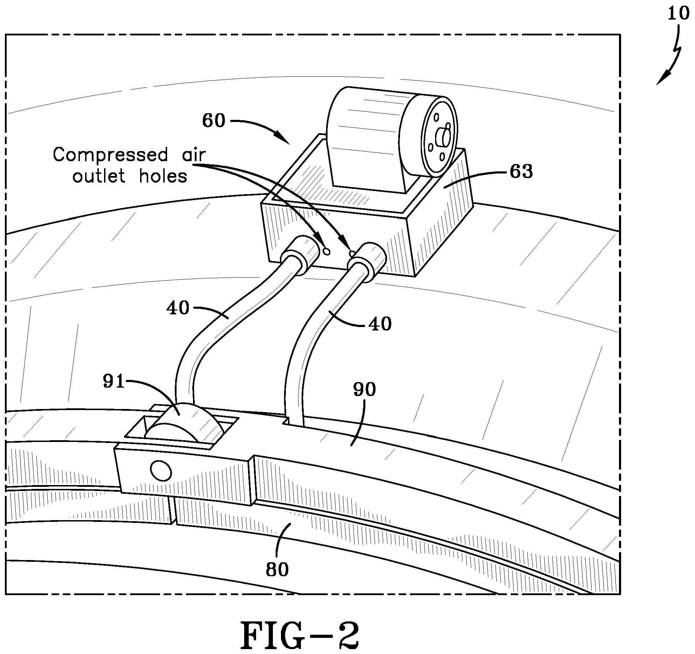

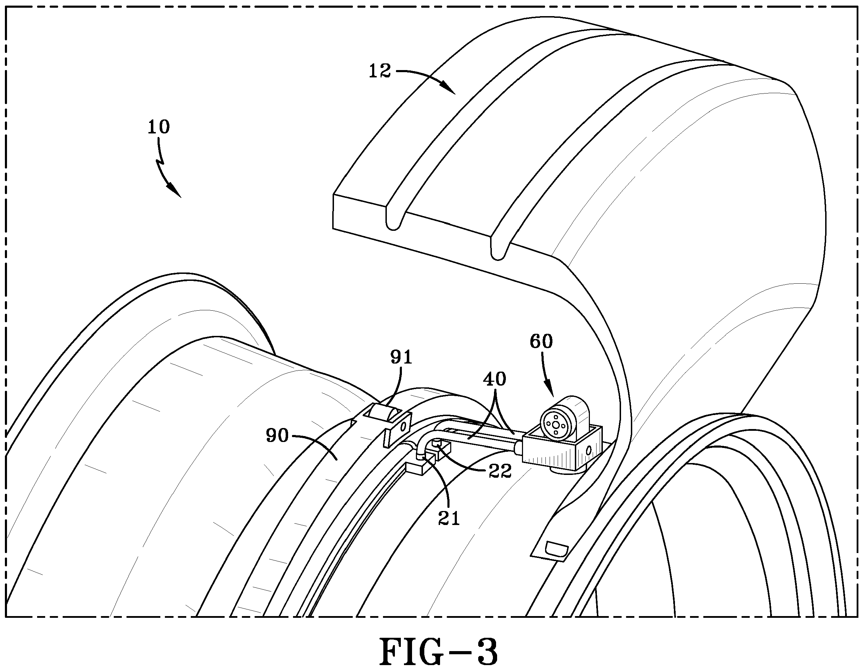

As shown in FIGS. 1-3, an air maintenance system 10 in accordance with the present invention includes a rotating inner ring 80, a stationary outer ring 90, an eccentric mass 50, an occlusion roller 70 located proximate to the eccentric mass, and a flexible tube 20 that defines a pump cavity.

The air maintenance system 10 is coupled to a rotating wheel 11 wherein the rotating inner ring 80 rotates with the rotating wheel while the eccentric mass 50 maintains a constant angular position relative to the rotating wheel 11.

This arrangement may thereby generate relative motion between the rotating inner ring 80 and the eccentric mass 50. The air maintenance system 10 may translate this relative motion into mechanical work or other energy forms. The air maintenance system 10 hence pumps a fluid from the ambient environment into a pneumatic tire 12 seat to the rotating wheel 11 by applying an occluding force against the flexible tube 20, periodically occluding portions of the pump cavity. The air maintenance system 10 may be coupled to the rim of the wheel 11, such as that of a truck, compact vehicle, motorcycle, bicycle and/or other vehicle.

The air maintenance system 10 may be a planetary system wherein the relative diameters between the inner rotating ring 80 and roller elements 91 collaborate to achieve the desired gear ratio and pumping speed. The pumping rate, pressure, and frequency may also be controlled with a passive or an active control mechanism.

The inner rotating ring 80 may apply an occluding force against the flexible tube 20. The inner rotating ring 80 also may provide a smooth bearing surface for the roller elements 91 and an occlusion roller 70, and may additionally contain or constrain other components of the air maintenance system 10. The inner rotating ring 80 may rotate with the rotating wheel 11, and may be statically, but removably, coupled to the rotating wheel.

An outer ring 90 encircles the air maintenance system 10 and applies an inward radial force against the rollers 91 when assembled. This inward radial force maintains the inner rotating ring 80 and the rollers 91. The inner rotating ring 80 preferably has a substantially homogeneous weight distribution such that no portion of the inner rotating ring is substantially heavier than another portion. The inner rotating ring 80 is preferably substantially rigid and made of metal (e.g. stainless steel, aluminum, titanium), but may alternately be made of a rigid polymer (e.g. polyacetylenes, polyfluroenes, nylon, and polyimides) or a ceramic.

The eccentric mass 50 overcomes the inertia and friction generated by the rotation of the inner rotating ring 80 and rotating wheel 11 such that the eccentric mass preferably stays substantially static while the inner rotating ring rotates. Further, the eccentric mass 50 is preferably coupled to the air maintenance system 10 to maintain the angular position of the eccentric mass relative to the road surface (which is contacted by the wheel 11) as the wheel rotates and provides torque, generated by gravity, that opposes the rotation of the inner rotating ring 80 with the wheel. In other words, the eccentric mass 50 may prevent the outer ring 90 from rotating with the wheel 11 and the inner rotating ring. This relative motion, enabled by the gravitational pull on the eccentric mass 50 may harvested to do mechanical work.

This relative motion occurs because the center of mass of the eccentric mass 50 is not located at the center of rotation such that the pull of gravity on the eccentric mass allows it to remain substantially static relative to the road surface while the inner rotating ring 80 rotates relative to the road surface. The weight of the eccentric mass 50 is large enough to generate the amount of mechanical work desired, in addition to being large enough to overcome friction and adequately dampen induced oscillations resulting from non-rotating motion (e.g. from bumps). The eccentric mass 50 may be rectangular, spherical, or amorphous. The eccentric mass 50 may be made of metal, such as stainless steel, copper, aluminum, etc., but may alternately be made of plastic, ceramic, and/or a fluid/gel. The roller elements 91 may additionally retain non-slip contact between the roller elements and the inner rotating ring 80, but may not provide a direct occluding force. The air maintenance system 10 may include two, three, five, or any suitable number of rollers.

The flexible tube 20 defines the pump cavity that holds a fluid and a deformable interface that occludes the pump cavity. The flexible tube 20 may have a circular or oval cross section. The flexible tube 20 comprises a flexible, elastomeric material such as rubber or thermosets, thermoplastics, or any other suitable material.

The flexible tube 20 include an inlet port 21 and an outlet port 22 each in fluid connection with tubes 40 and a pressure regulator assembly 60.

The pressure regulator assembly 60 preferably includes a control valve, check valves, a filter, and an inlet port 61 for receiving ambient air. A housing 63 of the pressure regulator assembly 60 may be secured to the wheel 11 with the inlet port 61 located externally to the tire cavity of the tire 12 and the remaining structures of the pressure regulator assembly 60 located internally to the tire cavity (Fig. 1).

The air maintenance system 10 utilize a peristaltic or reciprocating pump method. In the peristaltic method, the occlusion roller 70 constrict a portion the flexible tube 20 that is adjacent the occlusion roller thereby deforming the flexible tube segment by segment between an expanded condition and an at least partially collapsed condition in response to respective segment by segment deformation by the occlusion roller located, with the eccentric mass 50, by gravity statically at the bottom of the outer ring 90.

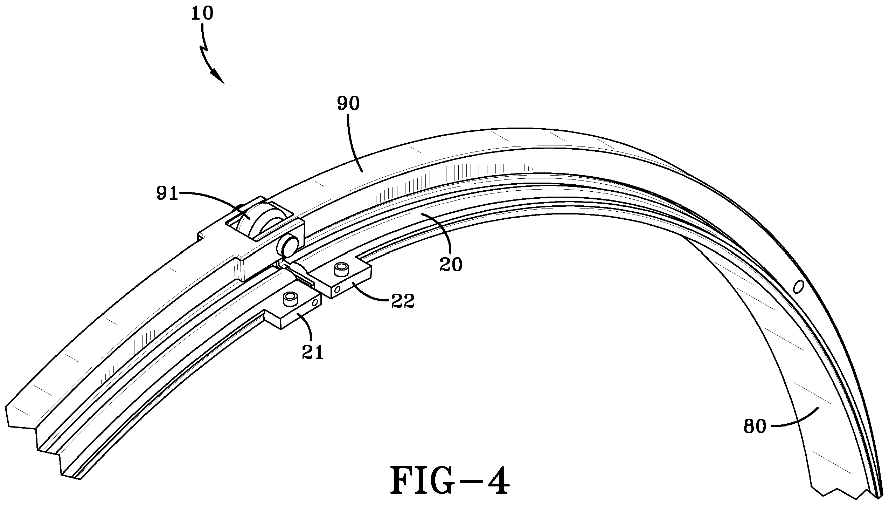

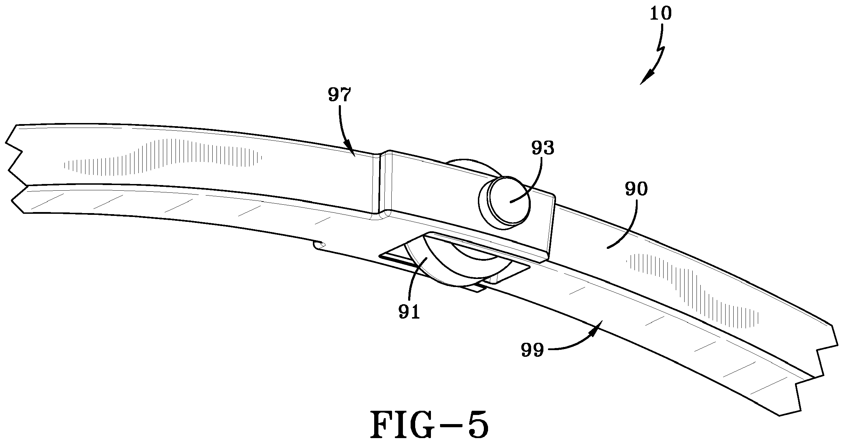

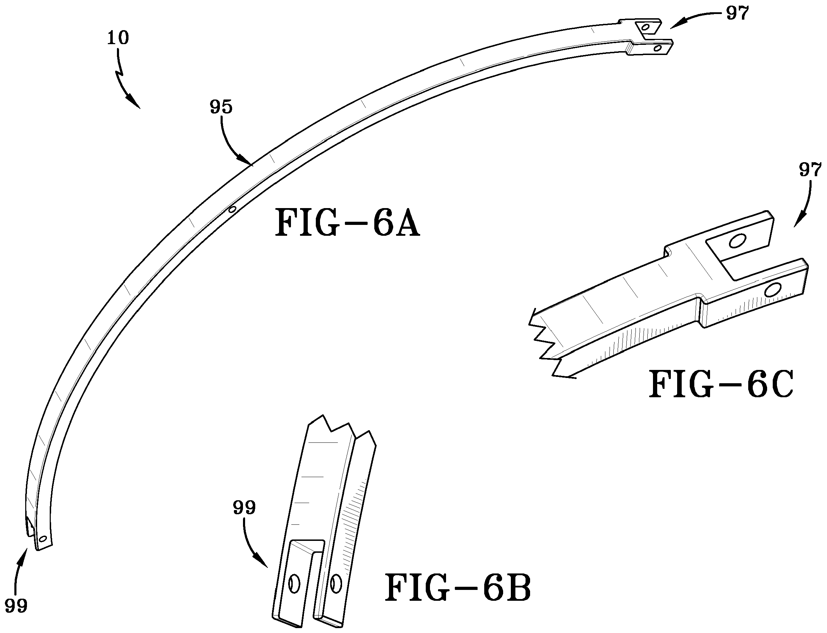

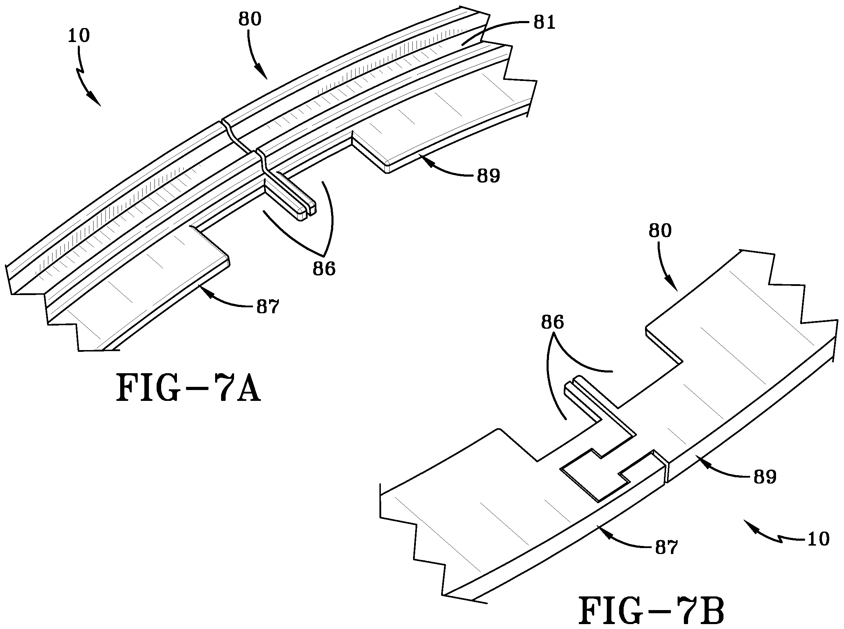

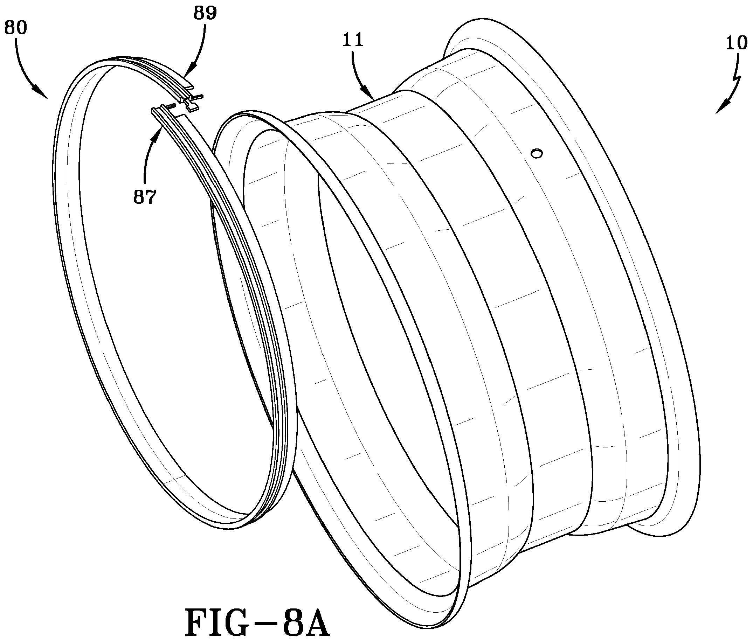

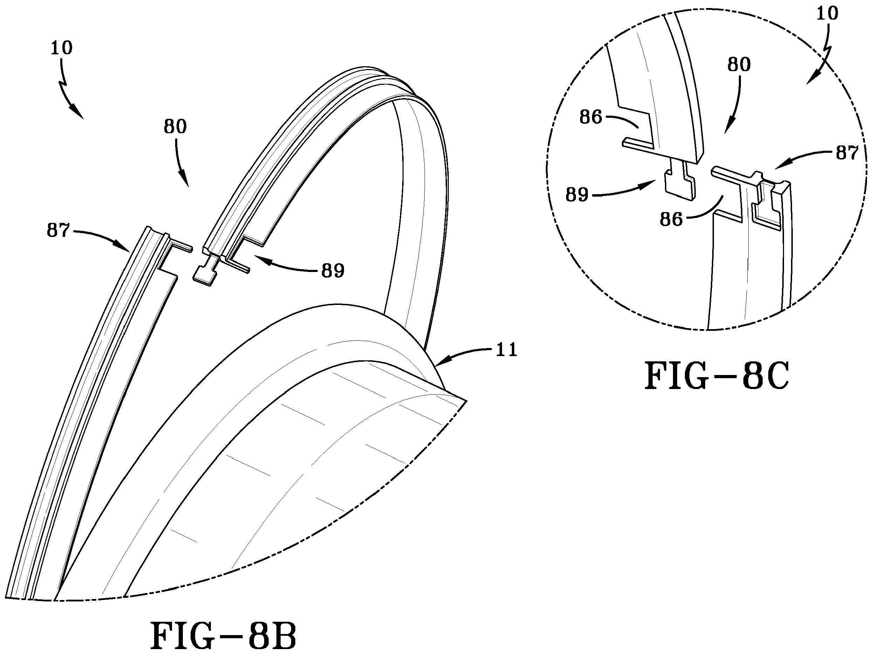

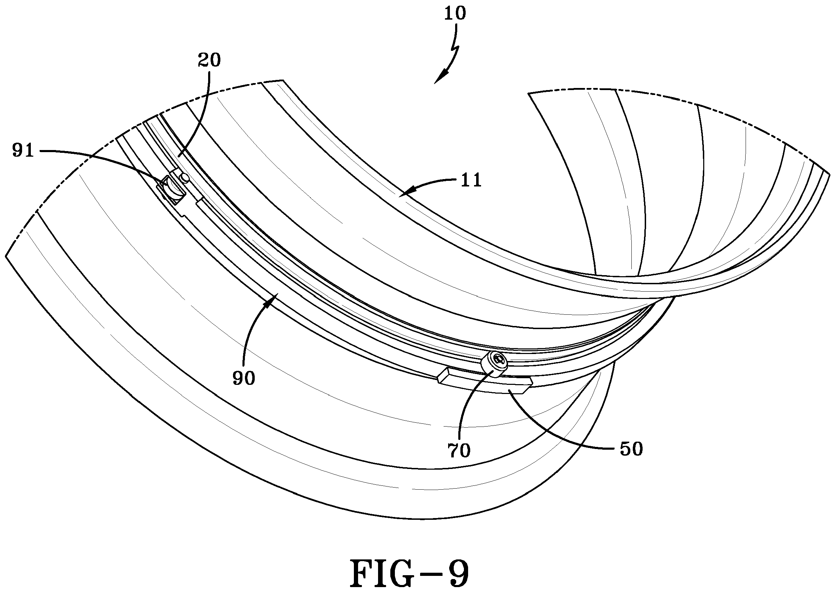

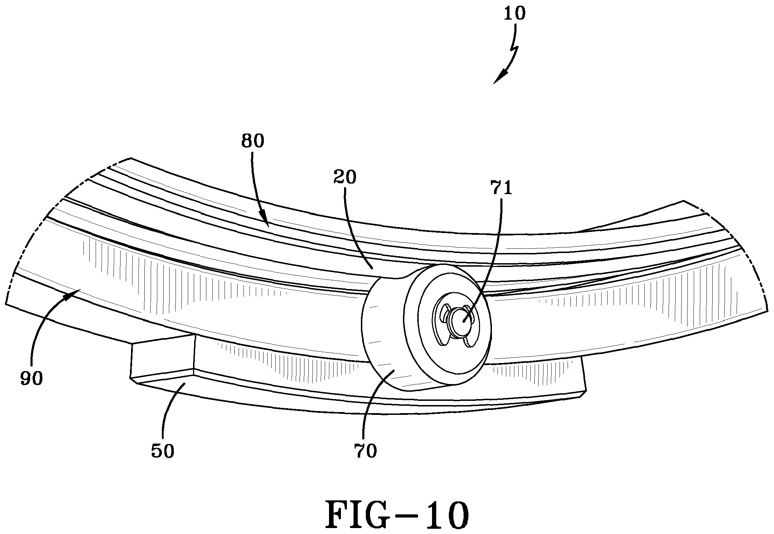

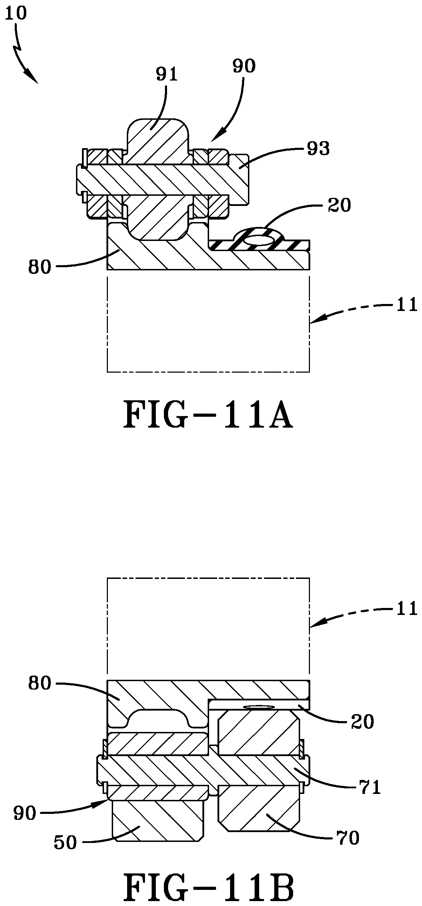

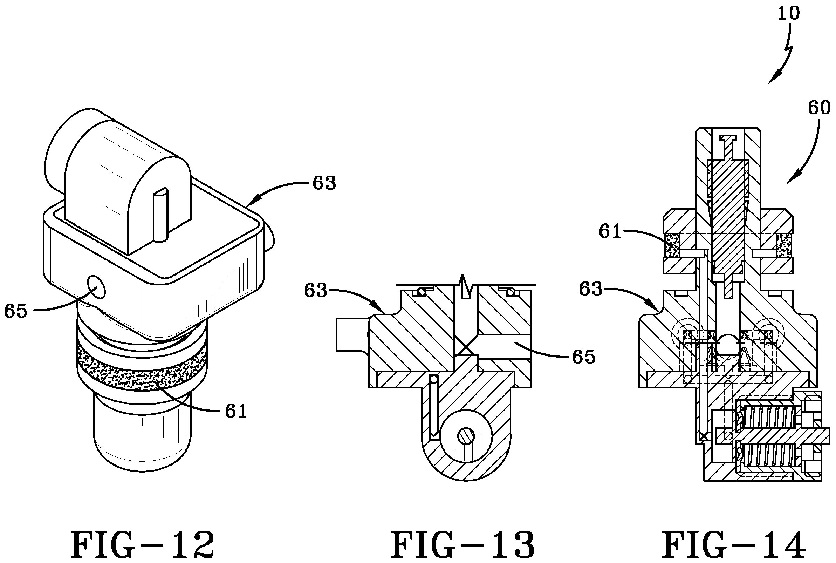

As shown in Fig. 4, the rotating inner ring 80 may be disposed concentrically in the stationary outer ring 90 with the roller elements 91 determining its orientation relative to the stationary outer ring. As shown in Fig. 5, the roller elements 91 may be rotatably secured to the stationary outer ring 90 by a shaft 93. As shown in Fig. 6, the stationary outer ring 90 may comprise a plurality of segments 95 (e.g., 3, 4, 5, etc.) a female mating connection at one end 97 and a male connection at its opposite end 99. As shown in Fig. 7, the rotating inner ring 80 may comprise a roller element track 81 for receiving the roller elements 91, a plurality of segments 85 (e.g., 1, 2, 3, 4, etc.) with a female recess at one end 87 for mating with a male clip connection at its opposite end 89. Each end 87, 89 may further have slots 86 for securing the flexible tube 20. As shown in Fig. 8, the rotating inner ring 80 may be secured to wheel 11 by connecting the ends 87, 89. As shown in Figs. 9-10, the occlusion roller 70 is rotatably attached to the stationary outer ring 90 by a shaft 71 such that the occlusion roller, held stationary by the eccentric mass 50, rolls and squeezes the flexible tube 20 as the rotating inner ring 80 and wheel 11 rotate. As shown in Fig. 11, the roller elements 91 may travel along the roller element track 81 and the occlusion roller 70 may sequentially squeeze the flexible tube 20 as the wheel 11 rotates. As shown in Figs. 12-14, the housing 63 of the pressure regulator assembly 60 may include a fill port 65 for regular tire pressure maintenance (e.g., an initial air fill up, etc.).

## Claims

1. An air maintenance system comprising an operationally rotating inner ring (80) secured to a vehicle wheel (11), a stationary outer ring (90) maintaining a constant angular position, an eccentric mass (50) secured to the stationary outer ring (90), an occlusion roller (70) located proximate to the eccentric mass (50), and a flexible tube (40) defining a pump cavity, wherein the air maintenance system (10) is configured for pumping a fluid from the ambient environment into a cavity of a pneumatic tire (12) by applying an occluding force against the flexible tube (40) periodically occluding portions of the pump cavity, **characterized in that** the occlusion roller (70) is rotatably attached to the outer ring (90).

2. The air maintenance system as set forth in claim 1 wherein the inner ring (80) rotates relative to the eccentric mass (50).

3. The air maintenance system as set forth in claim 1 or 2 wherein relative diameters between the inner ring (80) and roller elements (91) of the stationary outer ring (90) collaborate to achieve a desired gear ratio and pumping speed.

4. The air maintenance system as set forth in claim 3 wherein the inner ring (80) provides a smooth bearing surface for the roller elements (91) and the occlusion roller (70).

5. The air maintenance system as set forth in at least one of the previous claims wherein the stationary outer ring (90) encircles the air maintenance system and applies an inward radial force against the roller elements (91) when assembled.

6. The air maintenance system as set forth in claim 5 wherein the inward radial force maintains the inner ring (80) and the roller elements (91).

7. The air maintenance system as set forth in at least one of the previous claims wherein the inner ring (80) has a substantially homogeneous weight distribution such that no portion of the inner ring (80) is substantially heavier than another portion.

8. The air maintenance system as set forth in at least one of the previous claims wherein the inner ring (80) is substantially rigid and made of metal or wherein the inner ring (80) is made of a rigid polymer.

9. The air maintenance system as set forth in at least one of the previous claims wherein the eccentric mass (50) is configured to overcomes inertia and friction generated by rotation of the inner ring (80) and rotating wheel (11) such that the eccentric mass (50) stays substantially static while the inner ring (80) rotates.

10. The air maintenance system as set forth in at least one of the previous claims wherein the eccentric mass (50) is configured to maintain the angular position of the eccentric mass (50) relative to a road surface as the vehicle wheel (11) rotates and provides torque, generated by gravity, that opposes the rotation of the inner ring (80) with the vehicle wheel (11).

11. The air maintenance system as set forth in at least one of the previous claims wherein the eccentric mass (50) prevents the outer stationary ring (90) from rotating with the vehicle wheel (11) and the inner ring (80).

12. The air maintenance system as set forth in at least one of the previous claims wherein the eccentric mass (50) is rectangular or spherical.

13. The air maintenance system as set forth in at least one of the previous claims wherein the roller elements (91) retain non-slip contact between the roller elements (91) and the inner ring (80) and/or wherein there are three roller elements (91).

14. The air maintenance system as set forth in at least one of the previous claims wherein the flexible tube (40) defines a deformable interface that occludes the pump cavity; and/or wherein the flexible tube (40) has an oval cross section.

15. The air maintenance system as set forth in at least one of the previous claims wherein the flexible tube (40) comprises a flexible, elastomeric material; and/or wherein the flexible tube (40) include an inlet port (21) and an outlet port (22) that are each in fluid connection with a pressure regulator assembly (60).

## Patentansprüche

1. Luftaufrechterhaltungssystem umfassend einen betriebsmäßig rotierenden Innenring (80), der an einem Fahrzeugrad (11) gesichert ist, einen stationären Außenring (90), der eine kontante Winkelposition beibehält, eine exzentrische Masse (50), die an dem stationären Außenring (90) gesichert ist, eine Verschlussrolle (70), die sich in der Nähe der exzentrischen Masse (50) befindet, und einen flexiblen Schlauch (40), der einen Pumpenhohlraum definiert, wobei das Luftaufrechterhaltungssystem (10) zum Pumpen eines Fluids aus der Umgebung in einen Hohlraum von einem Luftreifen (12) durch Aufbringen einer Verschlusskraft gegen den flexiblen Schlauch (40), wodurch Teile des Pumpenhohlraums periodisch verschlossen werden, konfiguriert ist, **dadurch gekennzeichnet, dass** die Verschlussrolle (70) rotierbar an dem Außenring (90) befestigt ist.

2. Luftaufrechterhaltungssystem wie in Anspruch 1 dargelegt, wobei der Innenring (80) relativ zu der exzentrischen Masse (50) rotiert.

3. Luftaufrechterhaltungssystem wie in Anspruch 1 oder 2 dargelegt, wobei relative Durchmesser zwischen dem Innenring (80) und Rollenelementen (91) von dem stationären Außenring (90) zusammenwirken, um eine gewünschte Übersetzung und Pumpgeschwindigkeit zu erhalten.

4. Luftaufrechterhaltungssystem wie in Anspruch 3 dargelegt, wobei der Innenring (80) eine glatte Lageroberfläche für die Rollenelemente (91) und den Verschlussroller (70) bereitstellt.

5. Luftaufrechterhaltungssystem wie in mindestens einem der vorstehenden Ansprüche dargelegt, wobei der stationäre Außenring (90) das Luftaufrechterhaltungssystem umgibt und, wenn montiert, eine nach innen gerichtete Radialkraft gegen die Rollenelemente (91) aufbringt.

6. Luftaufrechterhaltungssystem wie in Anspruch 5 dargelegt, wobei die nach innen gerichtete Radialkraft den Innenring (80) und die Rollenelemente (91) hält.

7. Luftaufrechterhaltungssystem wie in mindestens einem der vorstehenden Ansprüche dargelegt, wobei der Innenring (80) eine im Wesentlichen homogene Gewichtsverteilung hat, so dass kein Teil von dem Innenring (80) wesentlich schwerer als ein anderer Teil ist.

8. Luftaufrechterhaltungssystem wie in mindestens einem der vorstehenden Ansprüche dargelegt, wobei der Innenring (80) im Wesentlichen steif und aus Metall hergestellt ist oder wobei der Innenring (80) aus einem steifen Polymer hergestellt ist.

9. Luftaufrechterhaltungssystem wie in mindestens einem der vorstehenden Ansprüche dargelegt, wobei die exzentrische Masse (50) dazu konfiguriert ist, Trägheit und Reibung zu überwinden, die durch Rotation von dem Innenring (80) und rotierenden Rad (11) erzeugt wird, so dass die exzentrische Masse (50) im Wesentlichen stationär bleibt, während der Innenring (80) rotiert.

10. Luftaufrechterhaltungssystem wie in mindestens einem der vorstehenden Ansprüche dargelegt, wobei die exzentrische Masse (50) dazu konfiguriert ist, die Winkelposition von der exzentrischen Masse (50) relativ zu einer Straßendecke beizubehalten, wenn das Fahrzeugrad (11) rotiert und ein durch Gravitation erzeugtes Drehmoment bereitstellt, das der Rotation von dem Innenring (80) mit dem Fahrzeugrad (11) entgegensteht.

11. Luftaufrechterhaltungssystem wie in mindestens einem der vorstehenden Ansprüche dargelegt, wobei die exzentrische Masse (50) verhindert, dass der stationäre Außenring (90) mit dem Fahrzeugrad (11) und dem Innenring (80) rotiert.

12. Luftaufrechterhaltungssystem wie in mindestens einem der vorstehenden Ansprüche dargelegt, wobei die exzentrische Masse (50) rechteckig oder sphärisch ist.

13. Luftaufrechterhaltungssystem wie in mindestens einem der vorstehenden Ansprüche dargelegt, wobei die Rollenelemente (91) einen rutschfesten Kontakt zwischen den Rollenelementen (91) und dem Innenring (80) halten und/oder wobei es drei Rollenelemente (91) gibt.

14. Luftaufrechterhaltungssystem wie in mindestens einem der vorstehenden Ansprüche dargelegt, wobei der flexible Schlauch (40) eine verformbare Schnittstelle definiert, die den Pumpenhohlraum verschließt, und/oder wobei der flexible Schlauch (40) einen ovalen Querschnitt hat.

15. Luftaufrechterhaltungssystem wie in mindestens einem der vorstehenden Ansprüche dargelegt, wobei der flexible Schlauch (40) ein flexibles Elastomermaterial umfasst und/oder wobei der flexible Schlauch (40) eine Einlassöffnung (21) und eine Auslassöffnung (22) einschließt, die jeweils in Fluidverbindung mit einer Druckregleranordnung (60) sind.

## Revendications

1. Système de maintien d'air comprenant une bague intérieure opérationnellement rotative (80) arrimée à une roue de véhicule (11), une bague extérieure fixe (90) maintenant une position angulaire constante, une masse excentrique (50) arrimée à la bague extérieure fixe (90), un galet d'occlusion (70) situé à proximité de la masse excentrique (50), et un tube flexible (40) définissant une cavité de pompe, dans lequel le système de maintien d'air (10) est configuré pour pomper un fluide à partir de l'environnement ambiant dans une cavité d'un pneumatique (12) en appliquant une force d'occlusion contre le tube flexible (40) occluant périodiquement des portions de la cavité de pompe, **caractérisé en ce que** le galet d'occlusion (70) est fixé rotatif à la bague extérieure (90).

2. Système de maintien d'air selon la revendication 1, dans lequel la bague intérieure (80) tourne par rapport à la masse excentrique (50).

3. Système de maintien d'air selon la revendication 1 ou 2, dans lequel des diamètres relatifs entre la bague intérieure (80) et des éléments de galet (91) de la bague extérieure fixe (90) collaborent pour atteindre un rapport d'engrenage et une vitesse de pompage souhaités.

4. Système de maintien d'air selon la revendication 3, dans lequel la bague intérieure (80) fournit une surface de roulement lisse pour les éléments de galet (91) et le galet d'occlusion (70).

5. Système de maintien d'air selon au moins l'une des revendications précédentes, dans lequel la bague extérieure fixe (90) encercle le système de maintien d'air et applique une force radiale vers l'intérieur contre les éléments de galet (91) lorsqu'ils sont assemblés.

6. Système de maintien d'air selon la revendication 5, dans lequel la force radiale vers l'intérieur maintient la bague intérieure (80) et les éléments de galet (91).

7. Système de maintien d'air selon au moins l'une des revendications précédentes, dans lequel la bague intérieure (80) présente une répartition du poids sensiblement homogène, de sorte qu'aucune portion de la bague intérieure (80) ne soit sensiblement plus lourde qu'une autre portion.

8. Système de maintien d'air selon au moins l'une des revendications précédentes, dans lequel la bague intérieure (80) est sensiblement rigide et faite de métal ou dans lequel la bague intérieure (80) est faite d'un polymère rigide.

9. Système de maintien d'air selon au moins l'une des revendications précédentes, dans lequel la masse excentrique (50) est configurée pour surmonter l'inertie et la friction générée par la rotation de la bague intérieure (80) et de la roue en rotation (11), de sorte que la masse excentrique (50) reste sensiblement statique lorsque la bague intérieure (80) tourne.

10. Système de maintien d'air selon au moins l'une des revendications précédentes, dans lequel la masse excentrique (50) est configurée pour maintenir la position angulaire de la masse excentrique (50) par rapport à une surface de route à mesure que la roue de véhicule (11) tourne et fournit un couple, généré par la gravité, qui oppose la rotation de la bague intérieure (80) avec la roue de véhicule (11).

11. Système de maintien d'air selon au moins l'une des revendications précédentes, dans lequel la masse excentrique (50) empêche la rotation de la bague extérieure fixe (90) avec la roue de véhicule (11) et la bague intérieure (80).

12. Système de maintien d'air selon au moins l'une des revendications précédentes, dans lequel la masse excentrique (50) est rectangulaire ou sphérique.

13. Système de maintien d'air selon au moins l'une des revendications précédentes, dans lequel les éléments de galet (91) conservent un contact antidérapant entre les éléments de galet (91) et la bague intérieure (80) et/ou dans lequel il y a trois éléments de galet (91).

14. Système de maintien d'air selon au moins l'une des revendications précédentes, dans lequel le tube flexible (40) définit une interface déformable qui occlut la cavité de pompe ; et/ou dans lequel le tube flexible (40) a une coupe ovale.

15. Système de maintien d'air selon au moins l'une des revendications précédentes, dans lequel le tube flexible (40) comprend un matériau élastomère flexible ; et/ou dans lequel le tube flexible (40) comporte un orifice d'admission (21) et un orifice de refoulement (22) qui sont chacun en raccordement fluidique avec un ensemble régulateur de pression (60).
